# EUROPÄISCHE PATENTANMELDUNG

(11) **EP 4 344 990 A1**
(43) Veröffentlichungstag der Anmeldung: **03.04.2024**
(21) Anmeldenummer: 23199131.6
(22) Anmeldetag: 22.09.2023
(51) Int. Cl.: B63B 35/44

(54) **SOLARSCHWIMMVORRICHTUNG**

(30) Priorität: 28.09.2022 DE 102022125006
(71) Anmelder: Zimmermann, Robert, 88436 Eberhardzell (DE)
(72) Erfinder: Zimmermann, Robert, 88436 Eberhardzell (DE)
(74) Vertreter: Daub, Thomas

(57) **Zusammenfassung**

Die Erfindung geht aus von einer Solarschwimmvorrichtung mit zumindest einem ersten Solarboot (18), das zumindest einen Schwimmkörper (14), eine mit dem Schwimmkörper (14) gekoppelte Trägerstruktur (16), und zumindest ein auf der Trägerstruktur (16) montiertes Solarelement (12) aufweist, mit einer Befestigungsvorrichtung (26), die dazu vorgesehen ist, das Solarboot (18) auf einem Gewässer positionssicher zu befestigen.

Es wird vorgeschlagen, dass die Befestigungsvorrichtung (26) zumindest ein Dalbenelement (28), das dazu vorgesehen ist, an einem Grund des Gewässers befestigt zu werden, und eine Dalbenaufnahme (30) aufweist, die an der Trägerstruktur (16) des ersten Solarboots (18) angebunden ist und zur Befestigung des Solarboots (18) an dem Grund des Gewässers formschlüssig mit dem Dalbenelement (28) gekoppelt ist.

## Beschreibung

### Stand der Technik

Die Erfindung betrifft eine Solarschwimmvorrichtung.

Es ist bereits eine Solarschwimmvorrichtung mit zumindest einem ersten Solarboot, das zumindest einen Schwimmkörper, eine mit dem Schwimmkörper gekoppelte Trägerstruktur, und zumindest ein auf der Trägerstruktur montiertes Solarelement aufweist, mit einer Befestigungsvorrichtung, die dazu vorgesehen ist, das Solarboot auf einem Gewässer positionssicher zu befestigen, vorgeschlagen worden.

Die Aufgabe der Erfindung besteht insbesondere darin, eine gattungsgemäße Vorrichtung mit verbesserten Eigenschaften hinsichtlich einer Befestigung auf einem Gewässer bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Solarschwimmvorrichtung mit zumindest einem ersten Solarboot, das zumindest einen Schwimmkörper, eine mit dem Schwimmkörper gekoppelte Trägerstruktur, und zumindest ein auf der Trägerstruktur montiertes Solarelement aufweist, mit einer Befestigungsvorrichtung, die dazu vorgesehen ist, das Solarboot auf einem Gewässer positionssicher zu befestigen.

Es wird vorgeschlagen, dass die Befestigungsvorrichtung zumindest ein Dalbenelement, das dazu vorgesehen ist, an einem Grund des Gewässers befestigt zu werden, und eine Dalbenaufnahme aufweist, die an der Trägerstruktur des ersten Solarboots angebunden ist und zur Befestigung des Solarboots an dem Grund des Gewässers formschlüssig mit dem Dalbenelement gekoppelt ist.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Solarschwimmvorrichtung" soll vorzugsweise eine Vorrichtung verstanden werden, die zumindest ein, vorzugsweise mehrere Solarelemente zur Umwandlung von Sonnenstrahlen in elektrische Energie aufweist und dazu vorgesehen ist, auf einem Gewässer positionsfest schwimmend angeordnet zu werden. Unter einem "Schwimmkörper" soll ein Körper verstanden werden, der eine Auftriebskraft erzeugt. Vorzugsweise soll unter einem Schwimmkörper ein Hohlkörper mit einem oder mehreren Hohlräumen, vorzugsweise mit einem einzelnen zusammenhängenden Hohlraum, verstanden werden.

Vorzugsweise ist die Trägerstruktur dazu vorgesehen, Stützkräfte, insbesondere auf einen Schwimmkörper, abzuleiten. Bevorzugt ist die Trägerstruktur wenigstens zu einem Großteil aus Metall ausgebildet. Besonders bevorzugt ist die Trägerstruktur wenigstens zu einem Großteil aus Stahl ausgebildet. Unter dem Ausdruck "wenigstens zu einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden. Unter einer "Trägerstruktur" soll vorzugsweise ein Rahmen aus miteinander verbundenen Trägerelementen, beispielsweise Stahlträgern verstanden werden.

Unter einem "Solarelement" soll ein Photovoltaikbauteil verstanden werden, das dazu vorgesehen ist, eine Sonnenstrahlenenergie in elektrische Energie umzuwandeln. Unter einer "Befestigungsvorrichtung" soll eine Vorrichtung verstanden werden, die zur positionssicheren Anbindung eines Solarboots auf einer Oberfläche eines Gewässers vorgesehen ist. Unter einem "Dalbenelement" soll vorzugsweise ein zylinderförmiges Element verstanden werden, das in einen Boden, insbesondere einen Grund eines Gewässers eingebracht ist und zur positionssicheren Befestigung eines auf dem Gewässer schwimmenden Solarboots vorgesehen ist. Ein Dalbenelement ist als ein Pfahl ausgebildet. Das Dalbenelement ist vorzugsweise als ein Hohlkörper, insbesondere als ein Hohlzylinder ausgebildet. Unter einer "Dalbenaufnahme" soll eine Aufnahme verstanden werden, die dazu vorgesehen ist, ein Dalbenelement formschlüssig aufzunehmen. Ein Dalbenelement ist zur Anbindung an die Dalbenaufnahme durch eine Aufnahme der Dalbenaufnahme geführt.

Dadurch kann eine besonders einfache Anbindung eines Solarschwimmmoduls, insbesondere eines gesamten Solarparks auf einem Gewässer bereitgestellt werden. Besonders vorteilhaft kann eine einfache und stabile Befestigung auf einem Gewässer bereitgestellt werden, das nach einer Montage der Solarschwimmvorrichtung angestaut wird und dabei der Wasserspiegel steigt.

Weiter wird vorgeschlagen, dass die Dalbenaufnahme als ein Teil der Trägerstruktur des Solarboots ausgebildet ist. Die Dalbenaufnahme ist vorzugsweise in die Trägerstruktur der Solarschwimmvorrichtung integriert. Die Dalbenaufnahme ist von fest mit der Trägerstruktur verbundenen Elementen oder von Elementen, die die Trägerstruktur ausbilden, gebildet. Dadurch kann die Dalbenaufnahme besonders einfach ausgebildet werden.

Ferner wird vorgeschlagen, dass die Dalbenaufnahme einen rechteckigen, vorzugsweise quadratischen Aufnahmebereich ausbildet. Dadurch kann die Dalbenaufnahme besonders vorteilhaft ausgebildet werden.

Es wird weiterhin vorgeschlagen, dass die Dalbenaufnahme einen Querschnitt aufweist, der um zumindest 5% größer ist als ein Querschnitt des Dalbenelements. Unter einem "Querschnitt der Dalbenaufnahme" soll vorzugsweise ein effektiver Querschnitt der Dalbenaufnahme verstanden werden, durch den ein Dalbenelement in montiertem Zustand geführt ist. Dadurch kann die Dalbenaufnahme besonders vorteilhaft dimensioniert werden, um ein Dalbenelement aufzunehmen.

Des Weiteren wird vorgeschlagen, dass die Dalbenaufnahme in einem Mittelbereich des Solarboots angeordnet ist. Dadurch kann die Dalbenaufnahme besonders vorteilhaft an dem Solarboot angeordnet werden.

Weiterhin wird vorgeschlagen, dass die Trägerstruktur einen Gangbereich des Solarboots ausbildet, wobei die Dalbenaufnahme in dem Gangbereich angeordnet ist. Unter einem "Gangbereich" soll vorzugsweise ein Bereich verstanden werden, der dazu vorgesehen ist, dass Personen darauf laufen können. Dadurch kann die Dalbenaufnahme besonders vorteilhaft in einem leicht zu erreichenden Bereich angeordnet werden, was insbesondere eine Wartung erleichtert.

Außerdem wird vorgeschlagen, dass das Dalbenelement als ein mehrteiliges Element ausgebildet ist, wobei die Länge des Dalbenelements veränderbar ist. Vorzugsweise ist das Dalbenelement aus mehreren teleskopisch ausfahrbaren Einzelelementen gebildet, die zur Verlängerung des Dalbenelements bis auf seine Maximallänge auseinandergefahren werden können. Grundsätzlich ist es auch denkbar, dass das mehrteilige Dalbenelement aus mehreren Einzelelementen gebildet ist, die aufeinander aufsteckbar sind. Dadurch kann das Dalbenelement besonders vorteilhaft an einen sich verändernden, insbesondere steigenden Wasserstand angepasst werden.

Zudem wird vorgeschlagen, dass das Dalbenelement als ein Erdungselement ausgebildet ist, über das zumindest ein Solarmodul und/oder weitere elektrische Bauteile, elektrisch geerdet sind. Dadurch kann eine Erdung der Solarschwimmvorrichtung besonders einfach erfolgen.

Ferner wird vorgeschlagen, dass die Dalbenaufnahme dazu vorgesehen ist, in ihrer Form und in ihrer Größe anpassbar zu sein. Die Dalbenaufnahme ist vorzugsweise durch Einsetzen von unterschiedlich dicken Gleitelementen in ihrem effektiven Durchmesser anpassbar. Dadurch kann die Dalbenaufnahme leicht auf unterschiedliche Größen von Dalbenelementen angepasst werden.

Ferner wird vorgeschlagen, dass die Solarschwimmvorrichtung zumindest ein weiteres Solarboot aufweist, das zumindest einen Schwimmkörper, eine mit dem weiteren Schwimmkörper gekoppelte Trägerstruktur, und zumindest ein mit der Trägerstruktur verbundenes Solarelement aufweist, wobei das weitere Solarboot mit dem ersten Solarboot verbunden ist und gemeinsam mit dem ersten Solarboot ein Solarfloß ausbildet. Vorzugsweise weist die Solarschwimmvorrichtung eine Vielzahl von weiteren Solarbooten auf, die miteinander verbunden sind. Ein Solarfloß ist als eine Gruppe von miteinander verbundenen Schwimmbooten ausgebildet. Die Solarboote eines Solarfloßes sind vorzugsweise starr miteinander verbunden. Grundsätzlich ist es auch denkbar, dass zumindest einige, oder alle Schwimmboote eines Solarfloßes beweglich miteinander gekoppelt sind, sodass die beweglich miteinander verbundenen Solarboote Ausgleichsbewegungen relativ zueinander ausführen können. Ein Solarfloß besteht vorzugsweise aus vier bis dreißig miteinander verbundenen Solarbooten. In einer Ausgestaltung weist ein Solarfloß vorzugsweise 3 mal 3, also neun miteinander verbundene Solarboote auf. Vorzugsweise ist es auch denkbar, dass ein Solarfloß sechzehn miteinander verbundene Solarboote aufweist. Grundsätzlich ist es ebenso denkbar, dass ein Solarfloß fünfundzwanzig oder dreißig miteinander verbundene Solarboote aufweist. Die Solarboote eines Solarfloßes sind vorzugsweise jeweils mit einem benachbarten Solarboot des Solarfloßes verbunden. Ein Solarfloß ist dabei vorzugsweise mit weiteren, vorzugsweise vier weiteren Solarflößen verbunden, also auf jeder Seite mit einem. Ein an einem Rand der Solarschwimmvorrichtung angeordnetes Solarfloß kann auch lediglich mit zwei oder drei anderen Solarflößen verbunden sein. Die zu einem Solarfloß zusammengefassten Solarboote sind vorzugsweise zu einem Großteil starr mit dem jeweiligen benachbart angeordneten Solarbooten verbunden. Grundsätzlich wäre es auch denkbar, dass einzelne Solarboote eines Solarfloßes auch flexibel miteinander verbunden sind. Die Solarboote eines Solarfloßes sind bezüglich ihrer Grundstruktur im Wesentlichen gleich ausgebildet. Alle Solarboote eines Solarfloßes weisen vorzugsweise jeweils zumindest einen Schwimmkörper, eine mit dem Schwimmkörper gekoppelte Trägerstruktur und zumindest ein Solarelement auf, die im Wesentlichen gleich ausgebildet sind. Grundsätzlich ist es dabei denkbar, dass verschiedene Solarboote eines Solarfloßes einen leicht abgeänderten Aufbau aufweisen und beispielsweise zusätzliche Bauteile oder Komponenten umfassen, die nicht auf jedem Solarboot nötig sind. Dabei sind vorzugsweise nicht alle Solarboote mit einem Dalbenelement an einem Boden eines Gewässers befestigt. Vorzugsweise weisen Solarboote, die nicht zur direkten Befestigung mit einem eigenen Dalbenelement an einem Boden eines Gewässers vorgesehen sind, keine Dalbenaufnahme auf. Grundsätzlich wäre es aber auch denkbar, dass alle Solarboote eines Solarbootes, oder der gesamten Solarschwimmvorrichtung eine Dalbenaufnahme aufweisen, jedoch lediglich einige der Solarboote mittels eines Dalbenelements direkt an einen Boden des Gewässers angebunden sind. Die anderen Solarboote sind dabei indirekt über die Verbindung mit einem der Solarboote, das über ein Dalbenelement direkt an den Grund des Gewässers angebunden ist, an den Boden des Gewässers angebunden. Dadurch kann eine Solarschwimmvorrichtung besonders vorteilhaft und einfach mit mehreren Solarbooten bereitgestellt werden.

Weiterhin wird vorgeschlagen, dass das zumindest eine weitere Solarboot starr mit dem ersten Solarboot gekoppelt ist. Darunter, dass das weitere Solarboot starr mit dem anderen Solarboot gekoppelt ist, soll vorzugsweise insbesondere verstanden werden, dass die Solarboote keine Ausgleichsbewegung zueinander ausführen können. Vorzugsweise sind insbesondere die Solarboote eines Solarfloßes jeweils starr untereinander verbunden. Die Solarboote eines weiteren Solarfloßes sind vorzugsweise beweglich mit Solarbooten eines anderen Solarfloßes verbunden. Dadurch kann ein Solarfloß besonders vorteilhaft, insbesondere steif ausgebildet werden.

Zudem wird vorgeschlagen, dass das zumindest eine weitere Solarboot frei von einer Dalbenaufnahme ausgebildet ist. Darunter, dass das weitere Solarboot frei von einer Dalbenaufnahme ist, soll verstanden werden, dass das entsprechende Solarboot keine Dalbenaufnahme aufweist. Das entsprechende Solarboot kann nicht direkt über ein Dalbenelement mit einem Boden eines Gewässers verbunden werden. Das Solarboot, welches frei von einer Dalbenaufnahme ist, ist direkt oder indirekt mit einem Solarboot gekoppelt, welches eine Dalbenaufnahme aufweist und über ein entsprechendes Dalbenelement mit dem Boden des Gewässers verbunden ist. Dadurch ist das frei von einer Dalbenaufnahme ausgebildete Solarboot indirekt über ein Dalbenelement, das mit einem anderen Solarboot verbunden ist, mit dem Boden des Gewässers verbunden. Dadurch kann das weitere Solarboot besonders einfach ausgebildet werden.

Ferner wird vorgeschlagen, dass die Solarschwimmvorrichtung eine Vielzahl von starr miteinander verbundenen Solarbooten aufweist, die das gemeinsame Solarfloß ausbilden, wobei lediglich das eine erste Solarboot eine Dalbenaufnahme aufweist und mit einem Dalbenelement an dem Grund eines Gewässers befestigt ist. Dadurch kann eine Solarschwimmvorrichtung mit mehreren zu einem Solarfloß zusammengefassten Solarbooten besonders effizient und bauteilarm über ein Dalbenelement sicher an dem Boden des Gewässers angebunden werden.

Es wird weiter vorgeschlagen, dass die Solarschwimmvorrichtung eine Vielzahl von zu einem Solarpark zusammengefassten, miteinander verbundenen Solarflößen aufweist, wobei lediglich 10% der Solarboote über eine Dalbenaufnahme und ein Dalbenelement an dem Grund des Gewässers befestigt sind. Vorzugsweise ist ein Solarpark aus zumindest 100, vorzugsweise mindestens 300 Solarbooten mit Solarelementen gebildet. Eine Anzahl der Solarboote, die zu einem Solarpark zusammengefasst sind, ist abhängig von dem Gewässer, auf dem dar Solarpark angebunden ist. Grundsätzlich ist es denkbar, dass der Solarpark mehr als 1000 Solarboote aufweist, die zu mehr als 110 Solarflößen zusammengefasst sind. Grundsätzlich ist es ebenso denkbar, dass ein Solarpark 1500 oder mehr miteinander gekoppelte Solarboote aufweist. Bevorzugt sind von der Vielzahl von zu einem Solarpark zusammengefassten Solarbooten lediglich zwischen 5% und 10% der Solarboote über ein Dalbenelement und eine Dalbenaufnahme direkt an einen Boden des Gewässers angebunden. Besonders bevorzugt sind unter 5%, vorzugsweise lediglich zwischen 2% und 5% der Solarboote der zu einem Solarpark zusammengefassten Solarboote direkt über ein Dalbenelement und eine Dalbenaufnahme mit dem Boden des Gewässers verbunden. Die Anzahl an Solarbooten eines Solarparks, die direkt über ein Dalbenelement und eine Dalbenaufnahme mit dem Boden des Gewässers verbunden ist, ist abhängig von einer anzunehmenden Windlast.

Dadurch kann ein Solarpark mit einer Vielzahl von Solarbooten besonders einfach und effizient möglichst kostengünstig auf einem Gewässer ortsfest angebunden werden.

Ferner wird ein Verfahren zur Montage einer Solarschwimmvorrichtung in einem Gewässer, beispielsweise einem Stausee vorgeschlagen, in dem in einem ersten Verfahrensschritt mehrere Dalbenelemente in einem trockenen Zustand des Gewässers in einen Boden eingebracht werden, und in einem weiteren Verfahrensschritt mehrere Solarboote auf dem Boden montiert und über entsprechende Dalbenaufnahmen an den Dalbenelementen befestigt werden. Dadurch kann ein Solarboot, insbesondere ein System aus mehreren Solarbooten, also ein Solarpark besonders einfach montiert werden.

Zudem wird vorgeschlagen, dass die Solarboote nach einer Montage auf dem Boden, während eines Anstauens des Gewässers, bei einem Steigen des Wasserspiegels entlang der Dalbenelemente axial verschoben werden und an den Dalbenelementen positionsfest aufschwimmen. Dadurch kann das Solarboot besonders einfach auf einem Gewässer, das angestaut wird, angeordnet werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Solarschwimmvorrichtung mit einem Solarboot und einer Befestigungsvorrichtung mit einem Dalbenelement und einer an dem Solarboot angebundenen Dalbenaufnahme,
- Fig. 2: eine schematische Seitenansicht eines Solarboots mit einem Dalbenelement zur Befestigung, das in einem Boden eines Gewässers befestigt ist,
- Fig. 3: eine schematische Detailansicht der Dalbenaufnahme und des darin angeordneten Dalbenelements,
- Fig. 4: eine stark schematisierte Ansicht eines Solarfloßes aus mehreren Solarbooten einer Solarschwimmvorrichtung in dem ersten Ausführungsbeispiel,
- Fig. 5: eine schematische Ansicht eines Teils eines Solarparks mit mehreren Solarbooten eines Solarfloßes,
- Fig. 6: eine stark schematisierte Ansicht eines Teils eines Solarparks mit einer Vielzahl von Solarbooten, die über einige Dalbenelemente positionsfest auf einem Gewässer angeordnet sind.
- Fig. 7: eine stark schematisierte Ansicht eines Solarfloßes aus mehreren Solarbooten einer Solarschwimmvorrichtung in dem zweiten Ausführungsbeispiel und
- Fig. 8: ein Solarboot mit einer alternativen Ausgestaltung eines Dalbenelements als mehrteiliges Element.

### Beschreibung des Ausführungsbeispiels

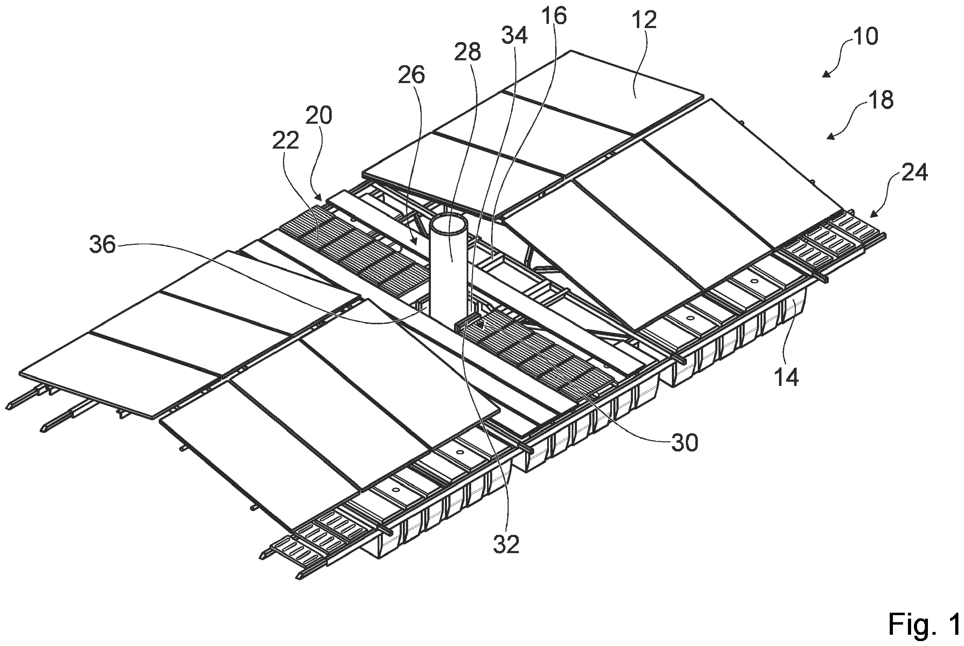

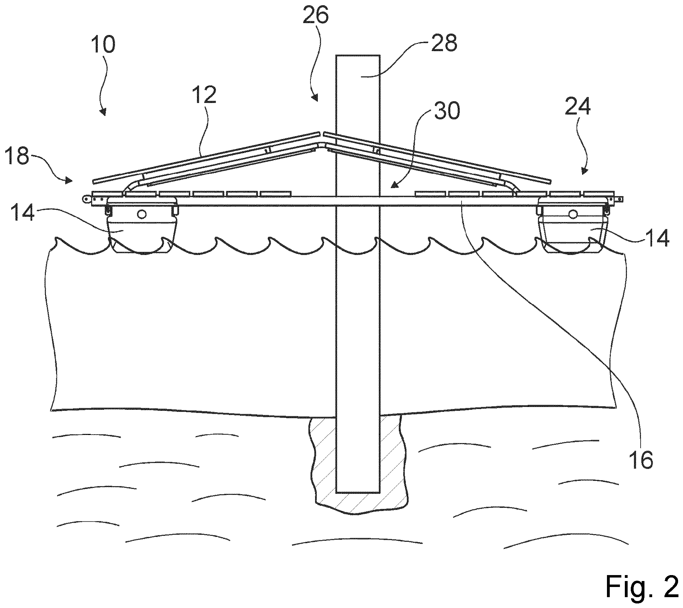

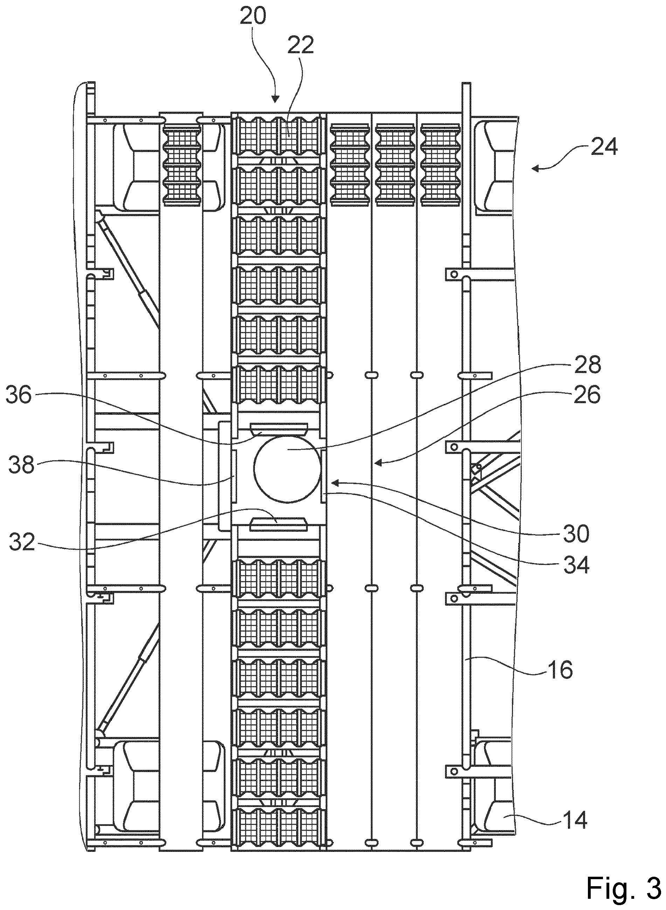

Die Figuren 1 bis 3 zeigen eine erfindungsgemäße Solarschwimmvorrichtung 10, welche dazu vorgesehen ist, schwimmend auf einem Gewässer angeordnet zu werden. Die Solarschwimmvorrichtung 10 weist ein erstes Solarboot 18 auf. Die Solarschwimmvorrichtung 10 weist mehrere weitere Solarboote 40, 52 auf. Die Solarschwimmvorrichtung 10 weist eine Vielzahl von Solarbooten 18, 40, 52 auf. Die Vielzahl von Solarbooten 18, 40, 52 ist vorzugsweise als ein zusammenhängender Solarpark 54 ausgebildet. Der Solarpark 54 bildet einen Verband einer Vielzahl von miteinander verbundenen Solarbooten 18, 40, 52 aus. Der Solarpark 54 weist vorzugsweise eine Größe von über 150 Solarbooten 18, 40, 52 auf. Die Anzahl der Solarboote 18, 40, 52, die ein Solarpark 54 aufweist, ist unter anderem abhängig von einer Größe des Gewässers, auf dem der Solarpark 54 schwimmend angeordnet ist. Der Solarpark 54 weist vorzugsweise mehr als 500 Solarboote auf. Grundsätzlich ist es auch denkbar, dass der Solarpark 54 von 500 - 1000 oder mehr als 1500 miteinander verbundenen Solarbooten 18, 40, 52 gebildet ist. Die im Folgenden näher beschriebene erfindungsgemäße Ausgestaltung der Solarschwimmvorrichtung ist unabhängig von einer Größe des Solarparks 54, also einer Anzahl von miteinander verbundenen Solarbooten.

Die Figur 1 zeigt beispielhaft einen Teil einer erfindungsgemäßen Solarschwimmvorrichtung 10. Die Figur 1 zeigt das erste Solarboot 18 der Solarschwimmvorrichtung 10. Das erste Solarboot 18 der Solarschwimmvorrichtung 10 weist zwölf Solarelemente 12 auf. Grundsätzlich ist es auch denkbar, dass das erste Solarboot 18 der Solarschwimmvorrichtung 10 eine andere Anzahl an Solarelementen 12 aufweist. Die Solarelemente 12 sind als Photovoltaikmodule ausgebildet. Die als Photovoltaikmodule ausgebildeten Solarelemente 12 sind zu einer Umwandlung von Sonnenstrahlenenergie in elektrischen Strom vorgesehen. Die Solarelemente 12 sind hier beispielhaft in zwei Gruppen zu jeweils sechs Solarelementen 12 auf dem Solarboot 18 der Solarschwimmvorrichtung 10 angeordnet. Grundsätzlich ist auch eine andere Anordnung der Solarelemente 12 denkbar.

Das Solarboot 18 der Solarschwimmvorrichtung 10 weist mehrere Schwimmkörper 14 auf. In dem beispielhaften Ausführungsbeispiel weist das Solarboot 18 sechs Schwimmkörper 14 auf. Grundsätzlich wäre es auch denkbar, dass das Solarboot 18 eine andere Anzahl an Schwimmkörpern 14 aufweist. Beispielsweise könnte das Solarboot 18 zwei, drei oder fünf Schwimmkörper 14 aufweisen. Die Schwimmkörper 14 sind zu einer Erzeugung einer Auftriebskraft vorgesehen. Die Schwimmkörper 14 sind vorzugsweise jeweils als ein geschlossener Hohlkörper ausgebildet. Die Schwimmkörper 14 sind jeweils aus einem einzelnen zusammenhängenden Hohlraum ausgebildet.

Das Solarboot 18 weist eine Trägerstruktur 16 auf. Die Trägerstruktur 16 ist mit den Schwimmkörpern 14 gekoppelt. Die Trägerstruktur 16 bildet einen Grundrahmen des Solarboots 18 der Solarschwimmvorrichtung 10 aus. Die Trägerstruktur 16 bildet eine tragende Grundstruktur des Solarboots 18 aus. Die Trägerstruktur 16 des ersten Solarboots 18 bildet einen Teil einer tragenden Struktur der Solarschwimmvorrichtung 10 aus. Die Trägerstruktur 16 ist als ein Rahmen aus mehreren miteinander verbundenen Trägern ausgebildet. Die Träger der Trägerstruktur 16 sind vorzugsweise als Metallträger, insbesondere als Stahlträger ausgebildet. Die Trägerstruktur 16 ist dazu vorgesehen, eine Stützkraft der Solarelemente 12 und weitere Aufbauten, wie beispielsweise eine Energierumwandlungseinheit auf die Schwimmkörper 14 des Solarboots 18 zu übertragen. Die Trägerstruktur 16 bildet eine rechteckige Grundfläche aus. Die Schwimmkörper 14 sind jeweils auf Längsseiten der Trägerstruktur 16 angebunden. Die Trägerstruktur 16 bildet eine Haltestruktur für die Solarelemente 12 aus. Grundsätzlich wäre es auch denkbar, dass eine tragende Struktur, und entsprechende Auftriebskörper zur Gewährleistung eines sicheren und stabilen Aufschwimmens des Solarboots auf eine andere Weise ausgebildet sind.

Die Schwimmkörper 14 bilden zusammen mit der Trägerstruktur 16 das Solarboot 18 aus. Das Solarboot 18 weist einen Mittelbereich 20 auf. Der Mittelbereich 20 des Solarboots 18 ist mittig zwischen den zwei Querseiten des Solarboots 18 angeordnet. Der Mittelbereich 20 des Solarboots 18 erstreckt sich in einer Querrichtung von der einen Längsseite zu einer gegenüberliegenden Längsseite der Trägerstruktur 16. Der Mittelbereich 20 ist zwischen den zwei aus jeweils mehreren Solarmodulen 12 ausgebildeten Gruppen an Solarmodulen 12 angeordnet. Die Trägerstruktur 16 bildet in dem Mittelbereich 20 des Solarboots 18 einen mittleren Gangbereich 22 aus. In dem mittleren Gangbereich 22 sind Bodenelemente angeordnet, die einen ebenen Boden ausbilden, auf dem Personen laufen können. Die Trägerstruktur 16 bildet auf der ersten Längsseite einen seitlichen Gangbereich 24 aus. Der seitliche Gangbereich 24 erstreckt sich oberhalb der Schwimmkörper 14, die auf der ersten Längsseite der Solarschwimmvorrichtung 10 angeordnet sind. Der seitliche Gangbereich 24 und der mittlere Gangbereich 22 sind miteinander verbunden.

Die Solarschwimmvorrichtung 10 weist eine Befestigungsvorrichtung 26 auf. Die Befestigungsvorrichtung 26 ist dazu vorgesehen, das Solarboot 18 auf einem Gewässer positionssicher zu befestigen. Die Befestigungsvorrichtung 26 ist dazu vorgesehen, das Solarboot 18 an einen Grund des Gewässers positionssicher anzubinden. Die Befestigungsvorrichtung 26 weist ein Dalbenelement 28 auf. Das Dalbenelement 28 ist dazu vorgesehen, an dem Grund des Gewässers befestigt zu werden. Das Dalbenelement 28 ist in den Grund des Gewässers eingebracht. Das Dalbenelement 28 erstreckt sich in den Grund des Gewässers. Dabei ist es denkbar, dass das Dalbenelement 28 beispielsweise in den Grund des Gewässers eingerammt ist. Grundsätzlich wäre es ebenso denkbar, dass das Dalbenelement 28 in einem Fundament, beispielsweise einem Betonfundament in dem Grund eingelassen ist. Das Dalbenelement 28 ist als ein längliches Element ausgebildet. Das Dalbenelement 28 ist als ein Pfahl ausgebildet. Das Dalbenelement 28 ist zylindrisch ausgebildet. Das Dalbenelement 28 ist als ein Hohlzylinder ausgebildet. Das Dalbenelement 28 weist einen runden Querschnitt auf. Das Dalbenelement 28 bildet einen abgeschlossenen Innenraum aus. Der Innenraum des Dalbenelements 28 weist einen Überdruck auf. Durch den Überdruck in dem Dalbenelement 28 kann vorzugsweise ein Eindringen von Wasser in das Dalbenelement 28 verhindert werden, wodurch eine Korrosion im Inneren des Dalbenelements 28 verhindert werden kann. Dadurch kann das Dalbenelement 28 besonders vorteilhaft kostengünstig ausgebildet werden, da beispielsweise ein Armbrustzuschlag eingespart werden kann.

Die Befestigungsvorrichtung 26 weist eine Dalbenaufnahme 30 auf. Die Dalbenaufnahme 30 ist an dem ersten Solarboot 18 angeordnet. Über die Dalbenaufnahme 30 ist das erste Solarboot 18 positionssicher auf dem Gewässer angebunden. Die Dalbenaufnahme 30 umschließt das Dalbenelement 28 in einem montierten Zustand vorzugsweise vollständig. Die Dalbenaufnahme 30 ist zur Befestigung des ersten Solarboots 18 am Grund des Gewässers formschlüssig mit dem Dalbenelement 28 gekoppelt. Die Dalbenaufnahme 30 ist entlang des Dalbenelements 28 verschiebbar angebunden. Über die Dalbenaufnahme 30 ist das Solarboot 18 entlang einer Hochachse des Dalbenelements 28 verschiebbar mit dem Dalbenelement 28 verbunden. Die Dalbenaufnahme 30 weist einen rechteckigen Querschnitt auf. Die Dalbenaufnahme 30 weist vorzugsweise einen quadratischen Querschnitt auf. Der Querschnitt der Dalbenaufnahme 30 ist um zumindest 5% größer ausgebildet als ein Querschnitt des Dalbenelements 28. Dadurch kann die Dalbenaufnahme 30 vorzugsweise so ausgebildet werden, dass die Dalbenaufnahme 30 an dem Dalbenelement 28 entlang gleiten kann, wobei insbesondere ein Verkanten der Dalbenaufnahme 30 an dem Dalbenelement 28 verhindert werden kann.

Die Dalbenaufnahme 30 ist dazu vorgesehen, in ihrer Form und in ihrer Größe anpassbar zu sein. Die Dalbenaufnahme 30 kann vorteilhaft einfach an unterschiedlich ausgeformte Dalbenelemente 28 angepasst werden. Die Dalbenaufnahme 30 ist in ihrem effektiven Querschnitt anpassbar. Die Dalbenaufnahme 30 weist vier Gleitelemente 32, 34, 36, 38 auf. Der effektive Querschnitt der Dalbenaufnahme 30 ist vorzugsweise durch Verwendung unterschiedlich dicker Gleitelemente 32, 34, 36, 38 variierbar. Die Gleitelemente 32, 34, 36, 38 sind als Gleitplatten ausgebildet. Die Gleitelemente 32, 34, 36, 38 sind dazu vorgesehen, dass das Dalbenelement 28 besondere vorteilhaft und mit einer geringen Reibung auf ihnen abgleiten kann. Durch die Gleitelemente 32, 34, 36, 38 kann das Dalbenelement 28 besonders gut in der Dalbenaufnahme 30 gleiten. Die Gleitelemente 32, 34, 36, 38 sind an Innenseiten der Dalbenaufnahme 30 angebracht. Die Gleitelemente 32, 34, 36, 38 bilden jeweils eine Kontaktfläche für das Dalbenelement 28 auf.

Die Dalbenaufnahme 30 ist an der Trägerstruktur 16 angebunden. Die Dalbenaufnahme 30 ist in dem Mittelbereich 20 des Solarboots 18 angeordnet. Die Dalbenaufnahme 30 ist vorzugsweise als ein Teil der Trägerstruktur 16 ausgebildet. Die Dalbenaufnahme 30 ist einstückig mit der Trägerstruktur 16 ausgebildet. Die Dalbenaufnahme 30 ist insbesondere in dem mittleren Gangbereich 22 angeordnet. Durch die Anordnung in dem mittleren Gangbereich 22 ist die Dalbenaufnahme 30 und dadurch in montiertem Zustand auch das Dalbenelement 28 gut zu erreichen. Die Dalbenaufnahme 30 ist in Querrichtung betrachtet leicht mittig angeordnet. In Längsrichtung betrachtet ist die Dalbenaufnahme 30 ebenfalls mittig angeordnet.

Das Dalbenelement 28 ist als ein Erdungselement ausgebildet. Über das als Erdungselement ausgebildete Dalbenelement 28 sind die Solarelemente 12 und weitere elektrische Bauteile der Solarschwimmvorrichtung 10, wie beispielsweise eine Energieumwandlungseinheit elektrisch geerdet. Dazu ist ein Erdungskabel von den Solarelementen 12 an das Dalbenelement 28 geführt und elektrisch mit diesem verbunden.

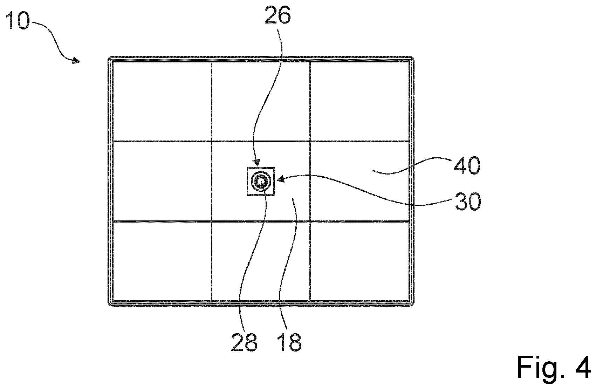

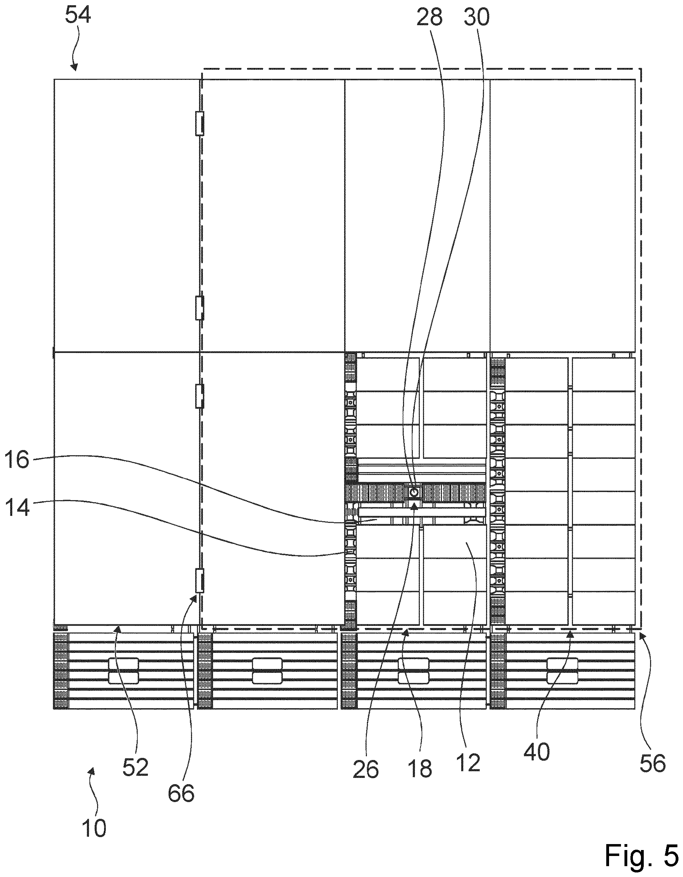

Die Figuren 4 und 5 zeigen einen Teil des aus mehreren Solarbooten 18, 40, 52 zusammensetzten Solarparks. In der Figur 4 sind neun separat ausgebildete Solarboote 18, 40 gezeigt. Die Solarschwimmvorrichtung 10 weist eine Vielzahl an Solarbooten 18, 40 auf, die zu dem Solarfloß 56 zusammengefasst sind. Die neun Solarboote 18, 40 sind miteinander verbunden. Die Solarboote bildet gemeinsam ein Solarfloß 56 aus. Grundsätzlich ist es auch denkbar, dass das Solarfloß 56 eine andere Anzahl an miteinander verbundenen Solarbooten 18, 40 aufweist. Beispielsweise ist es denkbar, dass das Solarfloß 56 lediglich sechs Solarboote 18, 40, sechzehn Solarboote 18, 40, fünfundzwanzig Solarboote 18, 40 oder mehr als dreißig Solarboote 18, 40 aufweist. Das Solarfloß 56 weist eine Vielzahl der weiteren Solarboote 40 auf. Die weiteren Solarboote 40 sind vorzugsweise identisch ausgebildet. Die weiteren Solarboote 40 sind zumindest im Wesentlichen identisch ausgebildet, wobei es denkbar ist, dass die weiteren Solarboote 40 zumindest teilweise andere Aufbauten aufweisen. Ein grundsätzlicher Aufbau, insbesondere eine tragende Struktur der weiteren Solarboote 40 ist vorzugsweise identisch. Die weiteren Solarboote 40 sind bezüglich ihres grundsätzlichen Aufbaus, insbesondere einer tragenden Struktur vorzugsweise identisch zu dem ersten Solarboot 18 ausgebildet. Da die weiteren Solarboote 40 im Wesentlichen gleich ausgebildet sind, soll im Folgenden nur eines der weiteren Solarboote 40 näher beschrieben werden, wobei die Beschreibung zur Erläuterung der weiteren Solarboote 40 herangezogen werden kann.

Das weitere Solarboot 40 weist mehrere Solarelemente 58 auf. Im Unterschied zu dem ersten Solarboot 18 weist das zweite Solarboot sechzehn Solarelemente 58 auf. Das weitere Solarboot 40 der Solarschwimmvorrichtung 10 weist mehrere Schwimmkörper 14 auf. In dem beispielhaften Ausführungsbeispiel weist das weitere Solarboot 40, äquivalent zu dem ersten Solarboot 18 sechs Schwimmkörper 60 auf. Die Schwimmkörper 60 sind zu einer Erzeugung einer Auftriebskraft vorgesehen. Das weitere Solarboot 40 weist eine Trägerstruktur 62 auf. Die Trägerstruktur 62 ist mit den Schwimmkörpern 14 gekoppelt. Die Trägerstruktur 62 bildet einen Grundrahmen des weiteren Solarboots 40 der Solarschwimmvorrichtung 10 aus. Die Trägerstruktur 62 bildet eine tragende Grundstruktur des weiteren Solarboots 40 aus. Die Trägerstruktur 62 ist als ein Rahmen aus mehreren miteinander verbundenen Trägern ausgebildet. Die Schwimmkörper 60 sind jeweils auf Längsseiten der Trägerstruktur 62 angebunden. Die Trägerstruktur 62 weist gleiche Abmaße auf wie die Trägerstruktur 16 des ersten Solarboots 18. Das weitere Solarboot 40 ist gleich groß ausgebildet wie das erste Solarboot 18. Das erste Solarboot und die weiteren Solarboote 40 weisen gleiche Abmaße auf. Die Trägerstruktur 62 bildet eine Haltestruktur für die Solarelemente 58 aus. Die Solarelemente 58 sind durchgängig von einer Querseite bis zu einer gegenüberliegenden Querseite des Solarboots 40 angeordnet. Die Solarelemente 58, sind im Gegensatz zu dem ersten Solarboot 18 auch in einem Mittelbereich des Solarboots 40 angeordnet, in dem das erste Solarboot 18 die Dalbenaufnahme 30 ausbildet.

Das weitere Solarboot 40 ist frei von einer Dalbenaufnahme ausgebildet. Das weitere Solarboot 40 weist in seinem Mittelbereich im Gegensatz zu dem ersten Solarboot 18 keine Dalbenaufnahme auf. Die Trägerstruktur 62 des weiteren Solarboots 40 bildet in seinem Mittelbereich keine Dalbenaufnahme auf. Das weitere Solarboot 40 ist nicht dazu vorgesehen, direkt über ein Dalbenelement an dem Grund des Gewässers befestigt zu werden. Das weitere Solarboot 40 ist nicht direkt über ein Dalbenelement positionsfest auf dem Gewässer angeordnet. Das weitere Solarboot 40 ist dazu vorgesehen indirekt, über eine Verbindung mit einem über ein Dalbenelement 28 an den Grund des Gewässers angebundenes Solarboot, insbesondere das erste Solarboot 18 positionssicher auf dem Gewässer angeordnet zu werden. Die Trägerstruktur 62 bildet in dem Mittelbereich des weiteren Solarboots 40 ebenfalls Anbindungen für Solarelemente 58 des weiteren Solarboots 40 aus. Dadurch können auf dem weiteren Solarboot 40 im Gegensatz zu dem ersten Solarboot 18, das eine Dalbenaufnahme aufweist, mehr Solarelemente 58 angebracht werden. In diesem Ausführungsbeispiel weist das weitere Solarboot 40 im Gegensatz zu dem ersten Solarboot 18, das über die Dalbenaufnahme 30 und das Dalbenelement 28 direkt mit dem Grund des Gewässers verbunden ist, vier Solarelemente 58 mehr auf.

Das weitere Solarboot 40 ist starr mit dem ersten Solarboot 18 gekoppelt. Das weitere Solarboot 40 ist direkt mit dem ersten Solarboot 18 gekoppelt. Das eine weitere Solarboot 40 ist direkt an einer Längsseite an dem ersten Solarboot 18 angebunden. Die weiteren Solarboote 40 des Solarfloßes 56 sind teilweise ebenfalls direkt, oder über die anderen weiteren Solarboote 40 indirekt mit dem ersten Solarboot 18 verbunden. Die Solarboote 18, 40 des Solarfloßes 56 sind jeweils starr untereinander verbunden. Die Solarboote 18, 40 des Solarfloßes 56 sind jeweils starr mit den benachbarten Solarbooten 18, 40 des Solarfloßes verbunden. Durch die starre Verbindung der Solarboote 18, 40 des Solarfloßes 56 kann das Solarfloß 56 besonders stabil ausgebildet werden. Vorzugsweise kann auch eine Verbindung und dadurch eine Kraftübertragung zwischen den Solarbooten 18, 40 des Solarfloßes 56 besonders vorteilhaft ausgebildet werden. Grundsätzlich wäre es auch denkbar, dass ein oder mehrere Solarboote 18, 40 des Solarfloßes 56 beweglich mit den benachbarten Solarbooten 18, 40 gekoppelt ist. Bei einer beweglichen Kopplung von zwei Solarbooten 18, 40 können die Solarboote 18, 40 eine Ausgleichsbewegung zueinander ausführen, vorzugsweise zueinander verschwenkt werden.

Lediglich das erste Solarboot 18 der Vielzahl von Solarbooten 18, 40 des Solarfloßes 56 ist über ein Dalbenelement 28 direkt mit dem Grund des Gewässers verbunden. Die weiteren Solarboote 40 des Solarfloßes 56t sind über das erste Solarboot 18 und dessen direkte Verbindung zwischen seiner Dalbenaufnahme 30 und dem Dalbenelement 28 indirekt an das Dalbenelement 28 angebunden. Die weiteren Solarboote 40 des Solarfloßes 56 sind mittels des Dalbenelements 28 indirekt positionsfest auf dem Gewässer angebunden. Die weiteren Solarboote 40 des Solarfloßes 56 können besonders einfach über die direkte oder indirekte Verbindung mit dem einen ersten Solarfloß 56, das über seine Dalbenaufnahme 30 und das Dalbenelement 28 mit dem Grund des Gewässers verbunden ist, positionssicher auf dem Gewässer angeordnet werden. Die weiteren Solarboote 40 weisen vorzugsweise keine Dalbenaufnahmen auf.

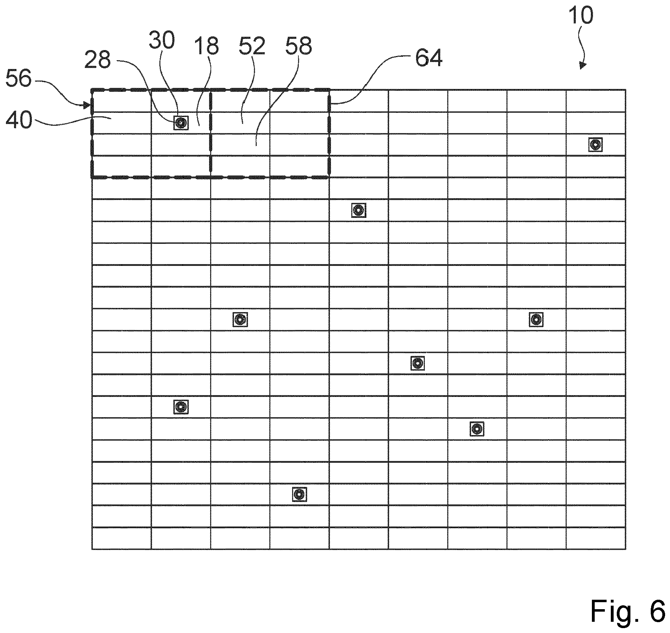

In den Figuren 5 und 6 ist jeweils ein Teil eines Solarparks 54 mit einer Vielzahl von miteinander verbundenen Solarbooten 18, 40, 52 dargestellt. Die Vielzahl von Solarbooten 18, 40, 52 sind vorzugsweise zu einer Vielzahl von Solarflößen 56, 64 zusammengefasst. In der Figur 5 sind die weiteren Solarflöße 64 als Teil eines benachbart zu dem ersten Solarfloß 56 angeordnetes Solarfloß 64 abgebildet. Das weitere Solarfloß 64 ist im Wesentlichen gleich ausgebildet wie das erste, oben beschriebene Solarfloß 56. Das weitere Solarfloß 64 soll deshalb im Folgenden nicht näher beschrieben werden, wobei zur Erläuterung des weitere Solarfloßes 64 die Beschreibung des ersten Solarfloßes 56 herangezogen werden kann. Das weitere Solarfloß 64 ist neben dem ersten Solarfloß 56 angeordnet. Das weitere Solarfloß 64 ist mit dem ersten Solarfloß 56 gekoppelt. Das weitere Solarfloß 64 ist über mehrere Koppelstellen 66 mit dem ersten Solarfloß 56 verbunden. Die an das erste Solarfloß 56 angrenzenden Solarboote 52 des zweiten Solarfloßes 64 sind jeweils mit dem benachbarten Solarboot 40 des ersten Solarfloßes 56 verbunden. Die benachbarten Solarflöße 56, 64 sind über eine direkte Verbindung zwischen ihren aneinandergrenzenden Solarbooten 40, 52 direkt miteinander gekoppelt. Die Solarboote 40, 56 der benachbarten Solarflöße 56, 64 sind beweglich miteinander gekoppelt. Die miteinander gekoppelten Solarboote 40, 52 der benachbarten Solarflöße 56, 64 sind über eine Koppelstelle beweglich miteinander verbunden. Die Koppelstellen 66, mittels denen die benachbarten Solarboote 40, 52 beweglich miteinander gekoppelt sind, sind als Knickgelenke ausgebildet. Die als Knickgelenke ausgebildeten Koppelstellen 66 bilden eine Schwenkachse aus, die vorzugsweise zwischen den entsprechenden Solarbooten 40, 52 angeordnet ist, über die die beiden Solarboote 40, 52 jeweils zueinander verschwenkbar sind. Durch die bewegliche Lagerung der beiden über die Koppelstelle 66 miteinander verbundenen Solarboote 40, 52 können sich die Solarboote 40, 52 beispielsweise bei Wellengang relativ zueinander bewegen. Durch die Koppelstellen 66 können die miteinander verbundenen Solarboote 40, 52 eine Relativbewegung zueinander ausüben. Dadurch können zwischen den Solarbooten 40, 52 auftretende Kräfte vorteilhaft reduziert werden.

In der Figur 6 ist ein Teil des Solarparks 54 mit der Vielzahl miteinander verbundenen, zu Solarflößen 56, 64 zusammengefassten Solarbooten 18, 40, 52 dargestellt. In der Figur sind beispielhaft 180 Solarboote 18, 40, 52 des Solarparks 54 dargestellt. Der gesamte Solarpark 54 kann vorzugweise mehr als 1000 Solarboote 18, 40, 52 aufweisen. Die 180 dargestellten Solarboote 18, 40, 52 des Solarparks 54 sind zu zwanzig miteinander verbundenen Solarflößen 56 zusammengefasst. Weniger als 10% der Solarboote 18, 40, 52 des Solarparks 54 sind direkt über ein Dalbenelement 28 an den Grund des Gewässers angebunden. Beispielhaft sind in dem gezeigten Ausführungsbeispiel lediglich 5% der Solarboote 18, 40, 52 des Solarparks 54 direkt an ein Dalbenelement 28 angebunden. Lediglich 5% der Solarboote 18, 40, 52 des Solarparks 54 weisen eine Dalbenaufnahme 30 auf. Von den 180 in der Figur dargestellten Solarbooten 18, 40, 52 weisen neun Solarboote 18 eine Dalbenaufnahme 30 auf. Lediglich neun der in Figur 6 dargestellten Solarboote 18, 40, 52 weisen eine Dalbenaufnahme 30 auf und sind direkt mit dem Grund des Gewässers verbunden. Die restlichen 172 dargestellten Solarboote 40, 52 sind lediglich indirekt mit den neun Solarbooten 18 direkt verbundenen Dalbenelementen 28 verbunden. Von den tausend Solarbooten 18, 40, 52 des gesamten Solarparks 54 sind lediglich 50 Solarboote 18 direkt mit eine Dalbenelement 30 gekoppelt. Grundsätzlich ist es auch denkbar, dass lediglich zwischen 2% und 5% der Solarboote 18, 40, 52 des gesamten Solarparks 54 eine Dalbenaufnahme 30 aufweisen und direkt mit einem Dalbenelement 28 gekoppelt sind.

Dadurch, dass lediglich 5% der Solarboote 18, 40, 52 direkt mit einem Dalbenelement 30 gekoppelt sind, kann eine positionssichere Anbindung des Solarparks 54 auf einem Gewässer besonders einfach und kostengünstig erfolgen. Lediglich für 5% der Solarboote 18, 40, 52 muss ein Dalbenelement 28 in den Grund des Gewässers eingebracht werden. Eine Anbindung der restlichen Solarboote 40, 52 erfolgt einfach über eine direkte Anbindung an die direkt benachbarten Solarboote 18, 40, 52. Vorteilhaft befindet sich die gesamte Befestigungsvorrichtung der Solarschwimmvorrichtung 10 für den gesamten Solarpark 54 innerhalb des Solarparks 54. Insbesondere müssen keine Taue, Seile oder Ketten gespannt werden, die beispielsweise an Befestigungselementen am Ufer des Gewässers angebunden sind, und die durch nicht von den Solarbooten 18, 40, 52 des Solarparks 54 bedeckte Bereiche des Gewässers verlaufen würden. Dadurch kann der Solarpark 54 besonders vorteilhaft auf Gewässern angeordnet werden, die zur anderweitigen Nutzung, beispielsweise zum Baden, durch die Schifffahrt, oder zum Angeln vorgesehen sind, ohne dass störende oder gefährliche Befestigungstaue oder Befestigungsketten durch das Gewässer zum Ufer geführt werden müssten.

Im Folgenden soll kurz ein Verfahren zur Anbringung des Solarparks 54 aus mehreren zu Solarflößen 56, 64 zusammengefassten Solarbooten 18, 40, 52 auf einem Gewässer beschrieben werden. In einem ersten Verfahrensschritt wird je erstem Solarfloß 18, das eine Dalbenaufnahme 30 aufweist und zur direkten Anbindung über ein Dalbenelement 28 vorgesehen ist, je ein Dalbenelement 28 in einem trockenen Zustand des Gewässers in den Boden eingebracht. Die Dalbenelemente 28 werden fest in den Boden eingebracht. In einem weiteren Verfahrensschritt werden die Solarboote 18, 40, 52 mit ihren Schwimmkörpern 14, ihrer Trägerstruktur 16 und den Solarelementen 12 auf dem trockenen Boden des Gewässers montiert. Die ersten Solarboote 18, die eine Dalbenaufnahme 30 aufweisen, werden mit ihren Dalbenaufnahmen 30 an dem entsprechenden Dalbenelement 28 befestigt. Die weiteren Solarboote 40, 52 werden jeweils mit den benachbarten Solarbooten 18, 40, 52 verbunden und zu Solarflößen 56, 64 zusammengefasst. Die Solarboote 18, 40, 52 sind über die Dalbenaufnahmen 30 der ersten Solarboote 18 axial verschiebbar an den entsprechenden Dalbenelementen 28 angebunden. In einem weiteren Verfahrensschritt wird das Gewässer angestaut. Die Solarboote 18, 40, 52 des Solarparks 54 schwimmen während des Anstauens des Gewässers bei einem steigenden Wasserspiegel entlang der Dalbenelemente 28 positionsfest auf dem Gewässer auf.

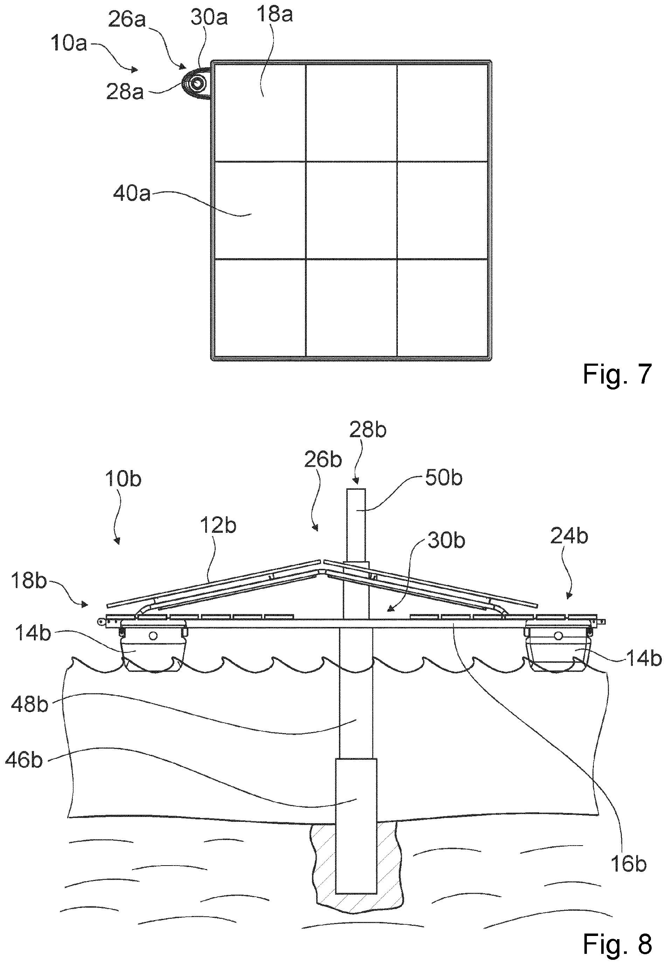

In den Figuren 7 und 8 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele sind in den Ausführungsbeispielen der Figuren 7 und 8 ist den Bezugszeichen die Buchstaben a und b nachgestellt.

Die Figur 7 zeigt eine alternative Ausgestaltung für ein Schwimmfloß aus mehreren Solarbooten 18a, 40a. Die Solarschwimmvorrichtung 10a weist Solarboote 18a, 40a auf, die im Wesentlichen gleich ausgebildet sind, wie die Solarboote 18a, 40a des ersten Ausführungsbeispiels. Im Unterschied zu dem ersten Ausführungsbeispiel sind die Dalbenaufnahmen 30a zur Befestigung der Solarboote 18a an einem Grund eines Gewässers nicht innerhalb des Solarboots18 angeordnet. Die Solarschwimmvorrichtung weist ein Dalbenelement 28a auf, das außerhalb eines Bereichs der Solarboote 18a, 40a angeordnet ist, die zu einem Solarfloß zusammengefasst sind. Die Solarschwimmvorrichtung 10a umfasst eine Dalbenaufnahme 30a, die neben dem Solarboot 18a angeordnet ist. Die Dalbenaufnahme 30a ist seitlich an einer Trägerstruktur 16a des Solarboots 18a angeordnet. Die Dalbenaufnahme 30a ist von Metallträgern gebildet, die seitlich an die Trägerstruktur 16a des Solarboots 18a angebunden sind.

Die Figur 8 zeigt eine alternative Ausgestaltung eines Dalbenelements 28b. Das Dalbenelement 28b ist im Unterschied zu dem ersten Ausführungsbeispiel als ein mehrteiliges Element ausgebildet, das in seiner Länge veränderbar ist. Das Dalbenelement 28b ist hier beispielhaft aus drei Einzelelementen 46b, 48b, 50b ausgebildet. Die drei Einzelelemente 46b, 48b, 50b sind teleskopisch zueinander ausfahrbar. Durch die ausfahrbaren Einzelelemente 46b, 48b, 50b kann das Dalbenelement 28b, beispielsweise während einem Anstauen eines Gewässers, auf dem die Solarschwimmvorrichtung 10b angebracht ist, in seiner Länge geändert werden. Grundsätzlich wäre es auch denkbar, dass das Dalbenelement 28b aus einer anderen Anzahl an Einzelelementen 46b, 48b, 50b gebildet ist. Grundsätzlich ist es auch denkbar, dass die Einzelelemente 46b, 48b, 50b nicht verschiebbar zueinander ausgebildet sind, sondern lediglich dazu vorgesehen sind, aufeinander aufgesteckt zu werden. Durch die mehrteilige Ausbildung der Dalbenelemente 28b kann die Länge der Dalbenelemente 28b vorteilhaft an einen aktuellen Wasserstand angepasst werden.

### Bezugszeichen

- 10: Solarschwimmvorrichtung
- 12: Solarelement
- 14: Schwimmkörper
- 16: Trägerstruktur
- 18: Solarboot
- 20: Mittelbereich
- 22: Gangbereich
- 24: Gangbereich
- 26: Befestigungsvorrichtung
- 28: Dalbenelement
- 30: Dalbenaufnahme
- 32: Gleitelement
- 34: Gleitelement
- 36: Gleitelement
- 38: Gleitelement
- 40: Solarboot
- 46: Einzelelement
- 48: Einzelelement
- 50: Einzelelement
- 52: Solarboot
- 54: Solarpark
- 56: Solarfloß
- 58: Solarelement
- 60: Schwimmkörper
- 62: Trägerstruktur
- 64: Solarfloß
- 66: Koppelstelle

## Patentansprüche

1. Solarschwimmvorrichtung mit zumindest einem ersten Solarboot (18), das zumindest einen Schwimmkörper (14), eine mit dem Schwimmkörper (14) gekoppelte Trägerstruktur(16), und zumindest ein auf der Trägerstruktur (16) montiertes Solarelement (12) aufweist, mit einer Befestigungsvorrichtung (26), die dazu vorgesehen ist, das Solarboot (18) auf einem Gewässer positionssicher zu befestigen, **dadurch gekennzeichnet, dass** die Befestigungsvorrichtung (26) zumindest ein Dalbenelement (28), das dazu vorgesehen ist, an einem Grund des Gewässers befestigt zu werden, und eine Dalbenaufnahme (30) aufweist, die an der Trägerstruktur (16) des ersten Solarboots (18) angebunden ist und zur Befestigung des Solarboots (18) an dem Grund des Gewässers formschlüssig mit dem Dalbenelement (28) gekoppelt ist.

2. Solarschwimmvorrichtung nach Anspruch 1, **dadurch gekennzeichnet, dass** die Dalbenaufnahme (30) als ein Teil der Trägerstruktur (16) des Solarboots (12) ausgebildet ist.

3. Solarschwimmvorrichtung nach einem der vorhergehenden Ansprüche, **dadurch gekennzeichnet, dass** die Dalbenaufnahme (30) einen rechteckigen, vorzugsweise quadratischen Aufnahmebereich ausbildet.

4. Solarschwimmvorrichtung nach einem der vorhergehenden Ansprüche, **dadurch gekennzeichnet, dass** die Dalbenaufnahme (30) einen Querschnitt aufweist, der um zumindest 5% größer ist als ein Querschnitt des Dalbenelements (28).

5. Solarschwimmvorrichtung nach einem der vorhergehenden Ansprüche, **dadurch gekennzeichnet, dass** die Dalbenaufnahme (30) in einem Mittelbereich (20) des Solarboots (18) angeordnet ist.

6. Solarschwimmvorrichtung nach einem der vorhergehenden Ansprüche, **dadurch gekennzeichnet, dass** die Trägerstruktur (16) einen Gangbereich (22) des Solarboots (18) ausbildet, wobei die Dalbenaufnahme (30) in dem Gangbereich (22) angeordnet ist.

7. Solarschwimmvorrichtung nach einem der vorhergehenden Ansprüche, **dadurch gekennzeichnet, dass** das Dalbenelement (28b) als ein mehrteiliges Element ausgebildet ist, wobei die Länge des Dalbenelements (28b) veränderbar ist.

8. Solarschwimmvorrichtung nach einem der vorhergehenden Ansprüche, **dadurch gekennzeichnet, dass** das Dalbenelement (28) als ein Erdungselement ausgebildet ist, über das zumindest ein Solarelement (12) und/oder weitere elektrische Bauteile elektrisch geerdet sind.

9. Solarschwimmvorrichtung nach einem der vorhergehenden Ansprüche, **dadurch gekennzeichnet, dass** die Dalbenaufnahme (30) dazu vorgesehen ist, in ihrer Form und in ihrer Größe anpassbar zu sein.

10. Solarschwimmvorrichtung nach einem der vorhergehenden Ansprüche, **gekennzeichnet durch** zumindest ein weiteres Solarboot (40), das zumindest einen Schwimmkörper(60), eine mit dem weiteren Schwimmkörper (60) gekoppelte Trägerstruktur (62), und zumindest ein mit der Trägerstruktur (62) verbundenes Solarelement (58) aufweist, wobei das weitere Solarboot (40) mit dem ersten Solarboot (18) verbunden ist und gemeinsam mit dem ersten Solarboot (18) ein Solarfloß (56) ausbildet.

11. Solarschwimmvorrichtung nach Anspruch 10, **dadurch gekennzeichnet, dass** das zumindest eine weitere Solarboot (40) starr mit dem ersten Solarboot (18) gekoppelt ist.

12. Solarschwimmvorrichtung nach Anspruch 10, **dadurch gekennzeichnet, dass** das zumindest eine weitere Solarboot (40) frei von einer Dalbenaufnahme ausgebildet ist.

13. Solarschwimmvorrichtung nach Anspruch 11, **gekennzeichnet durch** eine Vielzahl von starr miteinander verbundenen Solarbooten (18, 40), die das gemeinsame Solarfloß (56) ausbilden, wobei lediglich das eine erste Solarboot (18) eine Dalbenaufnahme (30) aufweist und mit einem Dalbenelement (28) an dem Grund eines Gewässers befestigt ist.

14. Solarschwimmvorrichtung nach Anspruch 10, **gekennzeichnet durch** eine Vielzahl von zu einem Solarpark (54) zusammengefassten, miteinander verbundenen Solarflößen (56, 64), wobei lediglich 10% der Solarboote (18, 40, 52) über eine Dalbenaufnahme (30) und ein Dalbenelement (28) an dem Grund des Gewässers befestigt sind.

15. Verfahren zur Montage einer Solarschwimmvorrichtung (10) in einem Gewässer, beispielsweise einem Stausee, **dadurch gekennzeichnet, dass** in einem ersten Verfahrensschritt mehrere Dalbenelemente (28) in einem trockenen Zustand des Gewässers in einen Boden eingebracht wird, und in einem weiteren Verfahrensschritt mehrere Solarboote (18, 40, 52) auf dem Boden montiert und über entsprechende Dalbenaufnahmen (30) an den Dalbenelementen (28) befestigt werden.

16. Verfahren nach Anspruch 15, **dadurch gekennzeichnet, dass** die Solarboote (18, 40, 52) nach einer Montage auf dem Boden, während eines Anstauens des Gewässers, bei einem Steigen des Wasserspiegels entlang der Dalbenelemente (28) axial verschoben werden und an den Dalbenelementen (28) positionsfest aufschwimmen.
